# EUROPEAN PATENT APPLICATION

(11) **EP 3 031 872 A1**
(43) Date of publication of application: **15.06.2016**
(21) Application number: 14196729.9
(22) Date of filing: 08.12.2014
(51) Int. Cl.: C09D 163/04, C09D 7/12, C09D 5/03, C09D 163/00

(54) **Expandable powder coating composition and method for powder coating**

(71) Applicant: Pulver Kimya San. ve Tic. A.S., 41400 Kocaeli (TR)
(72) Inventor: Pakkan, Hüseyin Cagatay, 41400 Kocaeli (TR); Gülbahar, Osman, 41400 Kocaeli (TR); Wittig, Michael, 64297 Darmstadt (DE)
(74) Representative: Sevinç, Erkan

(57) **Abstract**

The present invention proposes an expandable powder coating composition for formation of a coating layer on a metallic article, comprising epoxy resin and a curing agent for curing said epoxy resin, wherein said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C. The present invention further proposes a method for powder coating on a metallic article.

## Description

### Technical Field of the Invention

The present invention is related to an expandable powder coating composition for coating of metallic articles, a use for said expandable powder coating composition and a method for powder coating on flexible metallic articles.

### Background of the Invention

Protection of metallic objects by application of powder coating thereon is a well established technical field. For example, flexible metallic structures such as high tensile steel damper springs, which are to be subjected to harsh external conditions, are also generally protected with powder coating. In use, said structures with coating are faced with impacts by stones or sand particles with high mechanical hardness, and this may take place also under various temperatures where the coating layer thereon is vulnerable i.e. chips/notches and scratches may occur. Further examples of such external factors which are abrasive or corrosive include contact with mud, gasoline, grease or engine oil, antifreeze etc. At the end, the protective coating layer may be damaged by partially leaving the metallic surface, or by chemical deterioration causing water to reach the metallic surface and corrode it. Thus, when the coating layer is damaged due to such mechanical or chemical factors, water from outside can reach to the surface of the flexible metallic structure and cause corrosion, which leads to total loss of said structure.

In many cases, protective coatings are used in two or more subsequent layers (multilayer) for improved mechanical and/or chemical resistance on surfaces of metallic articles. Application of multilayer powder coating requires narrow and precise time intervals between applications of subsequent coating layers. For example, second layer of the multilayer powder coating system is conventionally applied precisely in the middle of the curing period for first layer which is in contact with the surface of the metallic article. Further, thermal conditioning of said metallic articles prior to coating, and controlling the ambient temperature and humidity require enormous setup costs and a very precise labor. Lack of fulfilling said requirements result in structural errors in coating systems, such as incrustation, flaking, insufficient adhesion between coating and metal substrate surface etc.

In US-A-5 981 086, first layer of a multilayer powder coating system comprises zinc powder for corrosion resistance. High density of zinc causes lack of homogeneity in coating thickness throughout the metal surface, due to agglomeration of powder material mixtures. Usually, large amounts of powder material are used for overcoming this deficiency and providing chip resistance by obtaining coating with higher thickness, which triggers an even more serious problem, namely formation of hairline cracks.

Introduction of chemical expansion agents, blowing agents or foaming agents into powder coating mixtures is a common solution for prevention of hairline cracks and by providing cushioning or denting instead of fragmenting in case of impact by objects with high density and high mechanical hardness (e.g. stones) (EP 0 994 141 B1). In curing step of a powder coating process, the coating layer takes a temporarily a liquid form when its temperature gets elevated, where said foaming agents provide gas formation in form of bubbles within the coating layer. Said gas expands the coating layer, and some of the gas bubbles incorporate with each other resulting in pinholing. Pinholing is a defect in the coating layer, which causes capillary flow of abovementioned corrosives onto the metal surface. For prevention the corrosives from entering presumed pinholes, it is known to add a further coating layer onto such foamed coating layer, but this means an additional step and related costs in the powder coating process.

Introduction of expandable polystyrene (EPS) into the coating mixture before the curing step is also known in the art. Yet, pinholing in such coating system is inevitable, therefore this option is also vulnerable against permeation of above mentioned corrosives across the coating layer incorporating EPS.

Chip and scratch resistance of coating layers against impacts by objects with high hardness and density (such as stones) is weak when merely polymers such as elastomeric polymers are employed in a powder coating mixture. Such polymeric coating is usually applied in 2, 3 or even 4 layers, which result in high coating thicknesses, and invites the formation of above mentioned hairline cracks. Furthermore, chip and scratch resistance is not the only mechanical requirement of a protective coating on flexible metallic articles such as damper springs. Vehicles having such springs may be subjected to very low external temperatures e.g. -40°C, and such temperatures can be lower than glass transition temperatures of polymers constituting such coating, thus said coating can easily fragmentize upon any reversible deformation of the spring. In such case, the metallic surface of the spring to be protected from corrosion would be exposed to contact with abovementioned corrosive materials. Similarly, bitumen coatings are also not suitable for use on flexible metallic articles such as damper springs, since such coatings get fragile in low-temperature conditions, and flaking occurs. Polybutadiene and butilene derivatives are known to be added into such coating compositions, in an amount up to 12% (w/w) with regard to total mass of respective coating compositions, for providing flexibility thus avoiding fractures in polymeric or bitumen-based coatings.

As explained above, powder coating on metallic articles is typically applied in a plurality of subsequent powder coating layers for obtaining a high final coating thickness in order to provide better protection for said metallic articles. To this end, a first powder coating layer is applied onto surface of said metallic article, said first coating layer is subjected to curing to an extent where a subsequent (second) layer can be applied thereon and a strong adhesion between said first and second layers is obtained upon curing of said second layer. In case of a very strong impact by a dense object with a high mechanical strength (e.g. a stone with a very high velocity impacting on a steel damper coated with such multilayer powder coating), the whole coating (i.e. both first and second coating layers) may disconnect from the metallic article, and leave it totally vulnerable against further external damages (corrosives and impacts).

### Objects of the invention

Primary object of the present invention is to overcome the abovementioned shortcomings encountered in powder coatings of prior art.

Another object of the present invention is to provide an expandable powder coating composition and a method of powder coating for obtainment of one or more coating layer(s) with improved corrosion prevention.

Another object of the present invention is to provide an expandable powder coating composition and a method of powder coating for obtainment of one or more coating layer(s) with high scratch and chip resistance.

Another object of the present invention is to provide an expandable powder coating composition and a method of powder coating for obtainment of one or more coating layer(s) with thermal expansion behavior close to that of steel.

Another object of the present invention is to provide an expandable powder coating composition and a method of powder coating for obtainment of one or more coating layer(s) with uniform thickness.

Another object of the present invention is to provide an expandable powder coating composition and a method of powder coating for obtainment of one or more coating layer(s) with shock absorbing behavior without sacrificing corrosion protection.

Another object of the present invention is to provide an expandable powder coating composition and a method of powder coating which enables separation of an outer coating layer for prevention of damage on an inner coating layer in case of impact by a dense object with a high mechanical hardness e.g. a stone.

### Summary of the invention

The present invention proposes an expandable powder coating composition for formation of a coating layer on a metallic article, comprising epoxy resin and a curing agent for curing said epoxy resin, characterized in that said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C. The present invention further proposes a method for powder coating on a metallic article.

### Detailed description of the invention

The present invention proposes a powder coating composition for formation of one or more coating layer(s) for corrosion protection of a flexible metal article coated therewith. The present invention further proposes a powder coating method on a metallic article. Said powder composition and powder coating method are particularly suitable for corrosion protection of high tensile steel damper springs which are to be subjected to harsh and highly corrosive external conditions.

The expandable powder coating composition according to the present invention comprises epoxy resin and a curing agent for curing said epoxy resin, wherein said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core, and the glass transition temperature of said thermoplastic is within the range of 140 to 160°C.

Thus, the core is encapsulated by a thermoplastic shell, and as the heat expandable polymeric microstructures are heated, the pressure of the core forces the thermoplastic shell to expand. Preparation of powder coating compositions includes a step of extrusion, where temperatures inside extruders are not expected to reach 140°C. The expandable powder coating composition according to the present invention is also to be subjected to extrusion. Since the glass transition temperature of the thermoplastic shell of is within the range of 140 to 160°C, which is higher than the temperatures expected from extruders used in preparation of powder coatings, the thermoplastic shell remains basically rigid and the heat expandable polymeric microstructures remain basically unexpanded throughout the extrusion despite the elevated pressure of the core forcing the thermoplastic shell to expand. Whilst curing, which is generally applied under a temperature within the range of 160 to 220°C, thermoplastic shell is above its glass transition temperature and thus the heat expandable polymeric microstructures are able to expand.

The epoxy resin hardens upon curing, and the heat expandable polymeric microstructures maintain their volume after expansion, since outer surfaces of said thermoplastic shells with regard to said fluid, is adhered to a matrix comprising the cured epoxy resin, wherein said matrix is a cured powder coating layer. Several types of such heat expandable polymeric microstructures are commercially available e.g. under the brand name Dualite (e.g. with model U006-190D) (Henkel), but not limited thereto, wherein the thermoplastic shell is a shell comprising acrylonitrile copolymer, and the fluid encapsulated within said shell comprises a high boiling point fluid.

The above explained thermal expansion of heat expandable polymeric microstructures, provides a non-porous coating onto metal surface upon curing of said powder coating layer, thus shock absorbing behavior without sacrificing corrosion protection is provided without 'hairline cracks'.

Said epoxy resin is in solid state and has low molecular weight, and said curing agent is suitable for curing said epoxy resin. Epoxy resins adhere firmly on metal substrates, thus the powder coating composition comprising epoxy resin provides a firm adhesion to surfaces of a metal article when applied and cured. Furthermore, epoxy resins are known to be reliable with their chemical resistance and electrical insulation capability. Corrosion-resistance is achieved without addition of zinc-based inorganic additives, thus uniform thickness is provided in coating layers formed using the expandable powder coating composition according to the present invention.

Said expandable powder coating composition preferably further comprises benzoin as a pinholing prevention agent, for prevention of any presumable pinholing whilst curing of said expandable powder coating composition; thus when applied and cured, the coating layer obtained with the expandable powder coating composition according to the present invention is highly impermeable to corrosive liquids, and an even more enhanced corrosion prevention is available.

Said expandable powder coating composition preferably further comprises glass microstructures and/or glass microfibers. This provides higher scratch and chip resistance with low cost with respect to Polybutadiene-related systems in the prior art. The presence of glass microstructures and/or glass microfibers provides high scratch and chip resistance to a coating layer obtained using the expandable powder coating composition according to the present invention. Furthermore, thanks to glass microfibers within such coating layer, in case of an impact of a dense object, relevant shock is distributed, which minimizes any presumable hazard on said coating layer. Furthermore, glass microstructures also add volume to the expandable powder coating composition according to the present invention.

Another favorable technical effect of addition of glass microstructures and/or glass microfibers to the expandable powder coating composition is enhancing the tolerance of the cured powder coating on a metallic article (e.g. a steel damper spring) against the thermal expansion coefficient difference between the cured powder coating and the metallic article. The difference between thermal expansion coefficients of steel and glass is not as high as the difference between thermal expansion coefficients of steel and a conventional cured powder coating known in the art. Thus, a cured powder coating layer prepared using the expandable powder coating composition according to the present invention with glass microstructures and/or glass microfibers maintains adhered to the surface of a metallic article after thermal shocks, i.e. even when thermal expansions and shrinkages occur due to harsh weather conditions. Thus, an expandable powder coating composition for obtainment of coating layer(s) with thermal expansion behavior close to that of steel is provided.

Said expandable powder coating composition preferably further comprises polyacrylate-based flow modifier. This provides an even distribution of materials comprised in the expandable powder coating composition throughout a powder coating layer when applied and cured.

Said expandable powder coating composition preferably further comprises one or more colorant or pigment for provision of various optical properties to the powder coating layers prepared using said expandable powder coating composition. The expandable powder coating composition according to the present invention may further comprise any other additives used in powder coating compositions known in the art.

Heat expandable polymeric microstructures for use in powder coating compositions according to the present invention are commercially available e.g. under the brand name Dualite, product ID: U005-190D (provided by Henkel North America, USA).

Said first and/or second compositions may preferably further comprise one or more colorant or pigment (e.g. carbon black commercially available under the brand name Printex-U provided by Orion Engineered Carbons GmbH, Germany) for provision of various optical properties to the powder coating layers prepared using said compositions. Said first and/or second compositions may further comprise any other additives used in powder coating compositions known in the art.

The glass microfibers can be preferably selected from the list consisting of E-glass microfibers, A-glass microfibers, E-CR-glass microfibers, C-glass microfibers, D-glass microfibers, R-glass microfibers or combinations thereof. Such glass microfibers are commercially available e.g. under brand name Microglass, product ID: 3082 (provided by Fibertec Inc., USA). Likewise, the glass microstructures suitable for use in powder coating compositions according to the present invention are commercially available e.g. under commercial product ID: GLASS-BEADS PF 0 S 0 - 20 µm (provided by Microbeads AG, Switzerland).

The expandable powder coating composition preferably further comprises a commercially available wax suitable for use in powder coating compositions, for obtainment of favorable surface properties such as smoothness or enhanced hydrophobicity.

The inorganic filler preferably comprises one or more compound selected from the list consisting of calcium carbonate, talc and barite. Calcium carbonate and talc provide a matte and smooth surface to cured coatings thanks to their lamellar structures; and barium sulfate provides a high density to coatings. Any commercially available products in powder form consisting of said fillers can be employed in expandable powder coating compositions; e.g. calcium carbonate under the brand name Omyacarb, product ID: 3-GZ or 1-KA (provided by Omya Asia Pacific).

The epoxy resin preferably comprises diglycydyl ether of bisphenol-A-epoxy resin having an epoxy equivalent weight in the range of 475 to 2000 selected from the list consisting of bisphenol-A-epoxy resin, bisphenol-F-epoxy resin, novolac epoxy resin or any combination thereof. Such epoxy resins are commercially available e.g. under the brand name DER, product ID: 663 UE (provided by Dow Chemical Company, Turkey).

The curing agent for use with the epoxy resin preferably comprises a phenolic diglycidyl ether with hydroxyl equivalent weight in the range of 240 to 270, which is commercially available e.g. under the brand name DEH, product ID: 81 or 82 (provided by Dow Chemical Company, Turkey). Said curing agent is especially useful for powder coating compositions comprising epoxy resin weight ratios up to 70% (w/w) with regard to the total mass of the respective powder coating composition.

For powder coating compositions with higher epoxy resin weight ratios according to the present inventions, namely up to 85% (w/w) with regard to the total mass of the respective powder coating composition, the curing agent for use with the epoxy resin can alternatively comprise a dicyandiamide derivative with softening temperature within the range of 130-150°C, which is commercially available e.g. under the brand name Aradur, product ID: 2844 (provided by Dow Huntsman, USA). The epoxy curing accelerator preferably further comprises 2-methylimidazole. 2-methylimidazole is commercially available e.g. under brand name Actiron 2, product ID: MI 20P (provided by Synthron, France).

The expandable powder coating composition according to the present invention can be applied on a metallic article in several successive layers. To this end, said expandable powder coating composition can be applied as successive layers; or more preferably, said expandable powder coating composition is applied onto another powder coating composition. By forming such successive layers, a subsequent layer is applied after curing of a preceding layer to an appropriate extent. Thus, a composite structure can be obtained, which comprises a first coating layer made of a first composition and a second coating layer made of a second composition, namely the expandable powder coating composition according to the present invention.

Accordingly, the present invention further provides a method for powder coating on a metallic article, wherein said method comprises following sequential steps:
a) deposition of a composition as a coating layer onto said first coating layer, wherein said composition comprises epoxy resin and a curing agent for curing said epoxy resin, said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C,
b) curing of the coating layer at a temperature over 160°C.

In a preferred embodiment of the method according to the present invention, said method comprises following sequential steps:
a) deposition of a first powder coating composition as a first coating layer onto said metallic article,
b) at least partly curing of the first coating layer at a temperature over 160°C,
c) deposition of a second composition as a second coating layer onto said first coating layer, wherein said second composition comprises epoxy resin and a curing agent for curing said epoxy resin, said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C,
d) curing of the second coating layer at a temperature over 160°C.

At above step 'b', 'at least partly curing of the first coating layer' is that the curing of said first coating layer is either complete or incomplete when the subsequent step 'c' is performed.

Thus, a composite system of multi-layer powder coating is achieved on a surface, e.g. a surface of a high tensile steel damper spring. In said composite system, the first coating layer is adhered to said surface, and the second coating layer is adhered onto said first coating layer. The first coating layer provides a high chemical resistance and impermeability, thus protection of the metallic object against corrosion is achieved by prevention of corrosive fluids onto said surface of the metallic article. The second coating layer has a high shock absorbance thanks to the presence of heat expandable polymeric microstructures; a high mechanical strength and high shock distributing ability, and a thermal expansion behavior close to the steel thanks to the presence of glass microstructures and/or glass microfibers in the second composition.

In case where the curing agent comprises a phenolic diglycidyl ether with hydroxyl equivalent weight in the range of 240 to 270, said first composition comprises the following ingredients with respective weight percentages with regard to the total weight of the first composition: epoxy resin 50-70% (w/w), curing agent 15-30% (w/w), flow modifier 0.5-2% (w/w), pigment 0-2% (w/w), pinholing prevention agent 0.3-1% (w/w), and inorganic filler 15-25% (w/w); and said second composition comprises the following ingredients with respective weight percentages with regard to the total weight of the second composition: epoxy resin 50-70% (w/w), curing agent 10-20% (w/w), flow modifier 0.5-2% (w/w), pigment 0-2% (w/w), filler 0-5% (w/w), glass microstructures 20-35% (w/w), glass microfibers 0.5-8% (w/w), and heat expandable polymeric microstructures 0.5-5% (w/w).

In case where the curing agent comprises a dicyandiamide derivative as mentioned above, said first composition comprises the following ingredients with respective weight percentages with regard to the total weight of the first composition: epoxy resin 50-85% (w/w), curing agent 2-5% (w/w), curing accelerator 0-5% (w/w), flow modifier 0.5-2% (w/w), pigment 0-2% (w/w), pinholing prevention agent 0.3-1% (w/w), and inorganic filler 15-25% (w/w); and said second composition comprises the following ingredients with respective weight percentages with regard to the total weight of the second composition: epoxy resin 50-85% (w/w), curing agent 2-5% (w/w), curing accelerator 0-5% (w/w), flow modifier 0.5-2% (w/w), pigment 0-2% (w/w), inorganic filler 0-5% (w/w), glass microstructures 0.5-8% (w/w), glass microfibers 20-35% (w/w), and heat expandable polymeric microstructures 0.5-5% (w/w).

Above mentioned ranges of weight ratios of components in first and second compositions for expandable powder coating composition according to the present invention are given in following Table 1 and Table 2. Table 1 shows preferred ranges of weight ratios of components where a curing agent comprising phenolic diglycidyl ether as described above; and Table 2 shows preferred ranges of weight ratios of components where a curing agent comprising a dicyandiamide derivative as described above. The scope of the present invention is only to be inferred in accordance with accompanying Claim 1, and not limited to the preferred ranges, components and weight ratios given in below tables.

**Table 1. Preferred ranges of weight ratios of components in first and second compositions for expandable powder coating composition according to the present invention, where the curing agent comprises phenolic diglycidyl ether.**

| Component | %(w/w) in the first composition | %(w/w) in the second composition |
|---|---|---|
| Epoxy resin | 50-70 | 50-70 |
| Curing agent | 15-30 | 10-20 |
| Flow modifier | 0.5-2 | 0.5-2 |
| Pigment | 0-2 | 0-2 |
| Pinholing prevention agent | 0.3-1 | N/A |
| Inorganic filler | 15-25 | 0-5 |
| Glass microstructures | N/A | 20-35 |
| Glass microfibers | N/A | 0.5-8 |
| Heat expandable polymeric microstructures | N/A | 0.5-5 |

**Table 2. Preferred ranges of weight ratios of components in first and second compositions for expandable powder coating composition according to the present invention, where the curing agent comprises a dicyandiamide derivative.**

| Component | %(w/w) in the first composition | %(w/w) in the second composition |
|---|---|---|
| Epoxy resin | 50-85 | 50-85 |
| Curing agent | 2-5 | 2-5 |
| Curing accelerator | 0-5 | 0-5 |
| Flow modifier | 0.5-2 | 0.5-2 |
| Pigment | 0-2 | 0-2 |
| Pinholing prevention agent | 0.3-1 | 0 |
| Inorganic filler | 15-25 | 0-5 |
| Glass microstructures | N/A | 0.5-8 |
| Glass microfibers | N/A | 20-35 |
| Heat expandable polymeric microstructures | N/A | 0.5-5 |

Preparation of first compositions and second compositions are illustrated by following non-restrictive examples, wherein concentration of each component within a respective composition is provided in weight percentage with respect to total weight of said composition:

### EXAMPLE 1:

**Table 3. A first examplary recipe for a first composition**

| Component | % (w/w) |
|---|---|
| DER 663 UE | 56 |
| DEH 81 | 17 |
| DEH 82 | 4 |
| BYK 3900 P | 1.5 |
| Printex U | 0.8 |
| BENZOIN | 0.7 |
| OMYACARB 3-GZ | 10 |
| OMYACARB 1-KA | 10 |

**Table 4. A first examplary recipe for a second composition**

| Component | % (w/w) |
|---|---|
| DER 663 UE | 46.3 |
| DEH 81 | 13 |
| DEH 82 | 4 |
| BYK 3900 P | 1.2 |
| PRINTEX U | 1.0 |
| OMYACARB 3-GZ | 0.5 |
| GLASS-BEADS PF 0 S 0-20µ | 28 |
| MICROGLASS 3082 | 3.5 |
| Dualite U005-190D | 2.5 |

### EXAMPLE 2

**Table 5. A second examplary recipe for a first composition**

| Component | % (w/w) |
|---|---|
| DER 663 UE | 72 |
| Aradur HT 2844 | 3.5 |
| Actiron 2 MI 20P | 1.5 |
| BYK 3900 P | 1.4 |
| Printex U | 0.9 |
| BENZOIN | 0.7 |
| OMYACARB 3-GZ | 10 |
| OMYACARB 1-KA | 10 |

**Table 6. A second examplary recipe for a second composition**

| Component | % (w/w) |
|---|---|
| DER 663 UE | 60 |
| Aradur HT 2844 | 3.5 |
| Actiron 2 MI 20P | 2.5 |
| BYK 3900 P | 1.3 |
| PRINTEX U | 1.0 |
| OMYACARB 3-GZ | 0.5 |
| GLASS-BEADS PF 0 S 0-20µ | 28 |
| MICROGLASS 3082 | 0.7 |
| Dualite U005-190D | 2.5 |

With the above explained and exemplified first and second compositions within the scope of the expandable powder coating composition according to the present invention; a high chemical resistance, high mechanical strength, and improved shock absorbance is achieved without hairline cracks and pinholing, thus without sacrificing the corrosion protection.

With the expandable powder coating composition and multilayer powder coating method according to the present invention, following objects are attained:
- the abovementioned shortcomings encountered in the technical field are overcome,
- an expandable powder coating composition and a method of powder coating for obtainment of one or more coating layer(s) with improved corrosion prevention is provided,
- an expandable powder coating composition and a method of powder coating for obtainment of one or more coating layer(s) with high scratch and chip resistance is provided,
- an expandable powder coating composition and a method of powder coating for obtainment of one or more coating layer(s) with thermal expansion behavior close to that of steel is provided,
- an expandable powder coating composition and a method of powder coating for obtainment of one or more coating layer(s) with uniform thickness is provided,
- an expandable powder coating composition and a method of powder coating for obtainment of one or more coating layer(s) with shock absorbing behavior without sacrificing corrosion protection is provided.

## Claims

1. An expandable powder coating composition for formation of a coating layer on a metallic article, comprising epoxy resin and a curing agent for curing said epoxy resin, **characterized in that** said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C.

2. An expandable powder coating composition according to the Claim 1, wherein said epoxy resin comprises diglycydyl ether of bisphenol-A-epoxy resin having an epoxy equivalent weight in the range of 475 to 2000 selected from the list consisting of bisphenol-A-epoxy resin, bisphenol-F-epoxy resin, novolac epoxy resin or a combination thereof.

3. An expandable powder coating composition according to the Claims 1 or 2, wherein said curing agent comprises phenolic diglycidyl ether with hydroxyl equivalent weight in the range of 240 to 270.

4. An expandable powder coating composition according to the Claims 1 or 2, wherein said curing agent comprises a dicyandiamide derivative with softening temperature within the range of 130-150°C.

5. An expandable powder coating composition according to any one of the Claims 1 to 4, further comprising an epoxy curing accelerator, wherein said epoxy curing accelerator comprises 2-methylimidazole.

6. An expandable powder coating composition according to any one of the Claims 1 to 5, further comprising one or more ingredients selected from the list consisting of pinholing prevention agent, glass microstructures, glass microfibers, flow modifier and wax.

7. An expandable powder coating composition according to according to any one of the Claims 1 to 6, further comprising one or more inorganic filler selected from the list consisting of calcium carbonate, talc and barite.

8. An expandable powder coating composition according to any one of the Claims 1 to 7, wherein the pinholing prevention agent comprises benzoin.

9. A method for powder coating on a metallic article, wherein said method comprises following sequential steps:
a) deposition of a composition as a coating layer onto said first coating layer, wherein said composition comprises epoxy resin and a curing agent for curing said epoxy resin, said expandable powder coating composition further comprises heat expandable polymeric microstructures with a weight ratio within the range of 0.5-10% (w/w) with respect to the total mass of the expandable powder coating composition, said heat expandable polymeric microstructures having a shell comprising a thermoplastic, encapsulating a fluid core and the glass transition temperature of said thermoplastic is within the range of 140 to 160°C,
b) curing of the coating layer at a temperature over 160°C.

10. A method for multilayer powder coating on a metallic article, wherein said method comprises following sequential steps:
a) deposition of a first powder coating composition as a first coating layer onto said metallic article,
b) at least partly curing of the first coating layer at a temperature over 160°C,
c) deposition of the composition according to the Claim 9 as a second coating layer onto said first coating layer,
d) curing of the second coating layer at a temperature over 160°C.

11. A method according to the Claim 10, wherein said first composition comprises the following ingredients with respective weight percentages with regard to the total weight of the first composition: epoxy resin 50-70% (w/w), phenolic diglycidyl ether based curing agent 15-30% (w/w), flow modifier 0.5-2% (w/w), pigment 0-2% (w/w), pinholing prevention agent 0.3-1% (w/w), and inorganic filler 15-25% (w/w),
and further wherein said second composition comprises the following ingredients with respective weight percentages with regard to the total weight of the second composition: epoxy resin 50-70% (w/w), phenolic diglycidyl ether based curing agent 10-20% (w/w), flow modifier 0.5-2% (w/w), pigment 0-2% (w/w), filler 0-5% (w/w), glass microstructures 20-35% (w/w), glass microfibers 0.5-8% (w/w), and heat expandable polymeric microstructures 0.5-5% (w/w).

12. A method according to the Claim 10, wherein said first composition comprises the following ingredients with respective weight percentages with regard to the total weight of the first composition: epoxy resin 50-85% (w/w), dicyandiamide derivative curing agent 2-5% (w/w), curing accelerator 0-5% (w/w), flow modifier 0.5-2% (w/w), pigment 0-2% (w/w), pinholing prevention agent 0.3-1% (w/w), and inorganic filler 15-25% (w/w),
and further wherein said second composition comprises the following ingredients with respective weight percentages with regard to the total weight of the second composition: epoxy resin 50-85% (w/w), dicyandiamide derivative curing agent 2-5% (w/w), curing accelerator 0-5% (w/w), flow modifier 0.5-2% (w/w), pigment 0-2% (w/w), inorganic filler 0-5% (w/w), glass microstructures 0.5-8% (w/w), glass microfibers 20-35% (w/w), and heat expandable polymeric microstructures 0.5-5% (w/w).
